# FASCICULE DE BREVET EUROPEEN

(11) **EP 2 393 648 B1**
(45) Date de publication et mention de la délivrance du brevet: **07.11.2012**
(21) Numéro de dépôt: 10707618.4
(22) Date de dépôt: 29.01.2010
(51) Int. Cl.: B29C 70/30, B29D 24/00, B32B 3/12, B64D 15/04, B64D 33/02, F02C 7/045, F02C 7/047, G10K 11/16, B32B 37/14

(54) **PROCEDE DE FABRICATION D'UN RESEAU DE CONDUITS DE DRAINAGE POUR UN PANNEAU POUR LE TRAITEMENT ACOUSTIQUE**
VERFAHREN ZUR HERSTLELUNG EINES ABFLUSSROHRNETZWERKES FÜR EINE AKUSTISCHE VERARBEITUNGSPLATTE
METHOD FOR MAKING A NETWORK OF DRAINAGE PIPES FOR AN ACOUSTIC PROCESSING PANEL

(30) Priorité: 03.02.2009 FR 0950663; 23.09.2009 FR 0956554
(43) Date de publication de la demande: 14.12.2011
(73) Titulaire: Airbus Opérations SAS, 31060 Toulouse (FR)
(72) Inventeur: CHELIN, Frédéric, F-32430 Encausse (FR); MENIER, Christophe, F-44640 Saint Jean De Boiseau (FR); THOMY, Jean Yves, F-44830 Brains (FR); BERTIN, Etienne, F-31400 Toulouse (FR); SURPLY, Thierry, F-31700 Cornebarrieu (FR); HARO, Dominique, F-31170 Tournefeuille (FR); GANTIE, Fabrice, F-31000 Toulouse (FR)
(74) Mandataire: Fantin, Laurent
(86) Numéro de dépôt international: PCT/FR2010/050145
(87) Numéro de publication internationale: WO 2010/089497

(56) Documents cités:
- EP-A1- 1 232 944
- WO-A1-02/081210
- FR-A1- 2 912 781
- GB-A- 2 066 354
- US-A1- 2006 219 475

## Description

La présente invention se rapporte à un procédé de fabrication d'un réseau de conduits de drainage rapporté au niveau d'un panneau pour le traitement acoustique.

Des techniques ont été développées pour réduire le bruit émis par un aéronef, et notamment le bruit émis par un ensemble propulsif, en disposant, au niveau des parois des conduits, des panneaux (également appelés revêtements ou structures) visant à absorber une partie de l'énergie sonore, notamment en utilisant le principe des résonateurs d'Helmholtz. De manière connue, un panneau pour le traitement acoustique comprend de l'extérieur vers l'intérieur une couche poreuse acoustiquement résistive, au moins une structure alvéolaire et une couche réflectrice ou imperméable.

Par couche, on entend une ou plusieurs couches de même nature ou non.

La couche poreuse acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Un nid d'abeilles peut être utilisé pour former la structure alvéolaire. Différents types de matériaux peuvent être utilisés pour former le nid d'abeilles.

Une tôle métallique ou composite peut être utilisée pour former la couche réflectrice.

Lorsque le panneau acoustique est installé au niveau d'une entrée d'air d'une nacelle, ce panneau acoustique doit être également compatible avec un traitement du givre. Par traitement du givre, on entend un procédé ou un système permettant d'éviter la formation et/ou l'accumulation de glace et/ou de givre.

Les documents EP-1.232.944 et EP-1.232.945 décrivent des panneaux pour le traitement acoustique compatible avec un traitement du givre utilisant de l'air chaud. Dans ce cas, la structure alvéolaire se présente sous la forme de bandes de cellules espacées entre elles ou d'une pluralité de conduits espacés entre eux. Ce traitement du givre est généralement couplé à un système de drainage permettant d'évacuer l'eau susceptible de s'accumuler dans les cellules de la structure alvéolaire, notamment dans les cellules disposées dans une zone s'étendant de 3h à 9h.

Ce drainage de l'eau est nécessaire pour limiter les risques de détérioration des cellules de la structure alvéolaire en raison du gel de l'eau accumulée, éviter les problèmes de corrosion et maintenir les performances acoustiques.

Selon un mode de réalisation décrit dans le document GB-2.066.354, la couche réflectrice comprend pour chaque cellule de la structure alvéolaire un orifice qui débouche dans un espace annulaire disposé à l'arrière de la couche réflectrice. Ainsi, selon ce document, toutes les cellules de la structure alvéolaire communiquant entre elles. Ce document divulgue également un procédé selon le préambule de la revendication 1.

Selon un autre mode de réalisation, les parois latérales des cellules comprennent des découpes en partie haute ou en partie basse de manière à faire communiquer les cellules entre elles, les cellules situées à 6h ou proches de 6h, comportant des orifices au niveau de la couche réflectrice de manière à évacuer l'eau du panneau pour le traitement acoustique.

Ces modes de réalisation ne donnent pas pleinement satisfaction car la présence d'un système de drainage couplé à un système de traitement du givre avec de l'air chaud tend à réduire les capacités du traitement acoustique et à générer un flux perturbé au niveau du flux d'air entrant dans la nacelle.

Le document FR-2.912.781 propose de réaliser au niveau de la structure alvéolaire un réseau de cellules dédiées au traitement du givre communiquant entre elles et isolant une ou plusieurs cellules dédiées au traitement acoustique et isolées des cellules utilisées pour faire circuler l'air chaud.

Pour drainer les fluides, la couche réflectrice comprend des orifices et des conduits sont prévus au niveau de sa face libre (opposée à celle contre laquelle sont fixées les cellules de la couche alvéolaire).

Pour réaliser ces conduits, on applique contre la face libre de la couche réflectrice une plaque dite par la suite de drainage, avec des sillons qui forment des conduits lorsque ladite plaque de drainage est collée contre la face libre de la couche réflectrice.

Pour que le drainage soit efficace, il faut que les orifices pratiqués dans la couche réflectrice débouchent dans les conduits.

Or, ces orifices sont généralement réalisés avant de déformer le panneau pour le traitement acoustique. Par conséquent, après la mise en forme du panneau pour l'adapter au rayon de courbure de la nacelle, ces orifices ne sont généralement plus alignés et leurs positions sont relativement aléatoires.

Si la plaque de drainage est fixée après la mise en forme du panneau, il est difficile de déterminer la forme des sillons pour qu'ils coopèrent avec les orifices.

Si la plaque de drainage est fixée avant la mise en forme du panneau, les déformations du panneau et de la plaque étant aléatoires, il peut arriver que les orifices qui coopéraient avec les conduits avant la mise en forme ne coopèrent plus après.

Selon une autre problématique, la face libre de la couche réflectrice n'est pas régulière et comprend des formes en creux des cellules appelées également « telegraphing ». Ces défauts de surface renforcent la difficulté d'obtenir des conduits étanches pour le drainage.

Aussi, la présente invention vise à pallier les inconvénients de l'art antérieur en proposant un procédé de fabrication d'au moins un conduit pour le drainage d'un panneau acoustique permettant d'assurer un positionnement correct des orifices d'évacuation des fluides avec ledit conduit de drainage.

A cet effet, l'invention a pour objet un procédé de réalisation d'un panneau pour le traitement acoustique comportant une couche poreuse acoustiquement résistive, au moins une structure alvéolaire, une couche réflectrice avec des orifices et une plaque de drainage comportant au moins un sillon permettant de délimiter au moins un conduit d'évacuation lorsque ladite plaque de drainage est plaquée contre la face libre de la couche réflectrice, consistant à :
- mettre en forme si nécessaire la couche réflectrice selon sa géométrie finale,
- apposer sur au moins une partie de la face libre de la couche réflectrice un film de démoulage,
- positionner sur le film de démoulage au moins un noyau dont la section est adaptée à celle du conduit d'évacuation de manière à ce que ledit au moins un noyau recouvre les orifices de la couche réflectrice,
- mouler la plaque de drainage sur ledit film de démoulage et ledit au moins un noyau,
- démouler la plaque de drainage et retirer ledit au moins un noyau et ledit film de démoulage,
- solidariser la plaque de drainage à la surface libre de la couche réflectrice.

D'autres caractéristiques et avantages ressortiront de la description qui va suivre de l'invention, description donnée à titre d'exemple uniquement, en regard des dessins annexés sur lesquels :
- la figure 1 est une vue en perspective illustrant un panneau pour le traitement acoustique avec des orifices d'évacuation des fluides,
- la figure 2 est une vue en perspective illustrant la mise en place sur la couche réflectrice d'un film et d'un noyau,
- la figure 3 est une vue en perspective illustrant la réalisation d'une plaque de drainage selon l'invention sur le panneau pour le traitement acoustique,
- la figure 4 est une vue en perspective d'une plaque de drainage après démoulage,
- la figure 5 est une vue en perspective d'un panneau pour le traitement acoustique incorporant une plaque de drainage selon l'invention,
- la figure 6 est une coupe illustrant en détail un conduit principal,
- la figure 7 est une coupe illustrant un conduit secondaire,
- la figure 8 est une vue en perspective d'une plaque de drainage après démoulage selon une autre variante de l'invention,
- la figure 9 est une vue en perspective d'un noyau pour l'obtention de la plaque de drainage de la figure 8, et
- la figure 10 est une vue en perspective d'un panneau pour le traitement acoustique incorporant la plaque de drainage visible sur la figure 8.

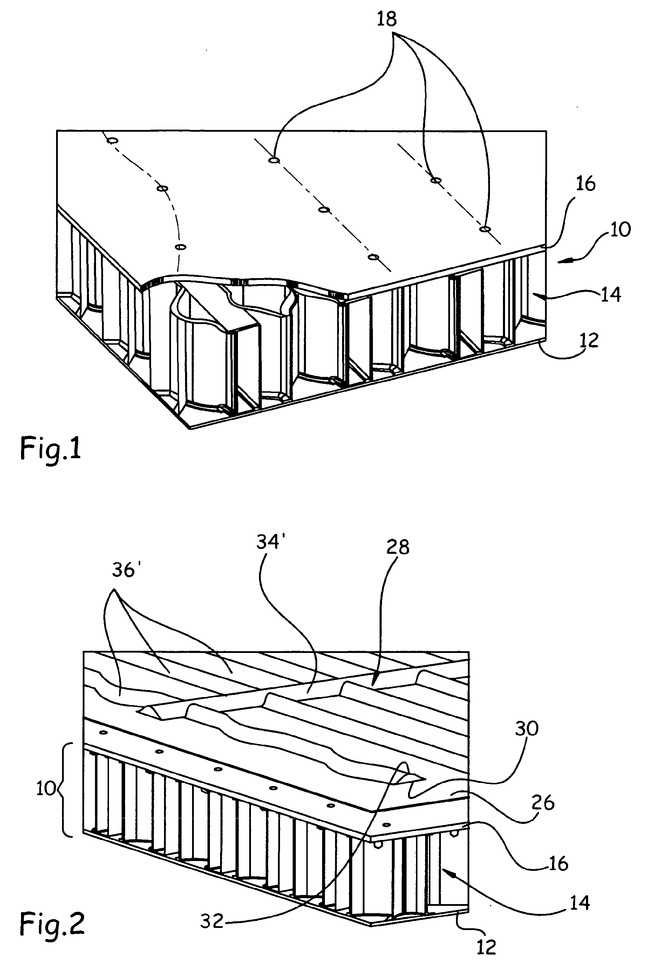

De manière connue, comme illustré sur la figure 1, un panneau 10 pour le traitement acoustique comprend de l'extérieur vers l'intérieur une couche poreuse acoustiquement résistive 12, au moins une structure alvéolaire 14 et une couche réflectrice ou imperméable 16. En variante, le panneau 10 pour le traitement acoustique peut comprendre plusieurs structures alvéolaires 14 superposées et séparées par des couches acoustiquement résistives 12 appelées également septum.

Selon un mode de réalisation, la couche réflectrice 16 est une tôle métallique ou en matériau composite.

Selon un mode de réalisation, la structure alvéolaire 14 peut se présenter sous la forme d'une structure en nid d'abeilles.

En variante, la structure alvéolaire peut être telle que celles décrites dans les documents EP-1.232.944 et EP-1.232.945. Ainsi, le panneau pour le traitement acoustique compatible avec un traitement du givre utilisant de l'air chaud comprend des bandes de cellules espacées entre elles par des conduits pour canaliser l'air chaud utilisé pour le traitement du givre.

Selon une autre variante, la structure alvéolaire peut être telle que décrite dans la demande de brevet FR-0950663.

La couche acoustiquement résistive, la structure alvéolaire, la couche réflectrice ne sont pas plus décrites car elles sont connues de l'homme du métier et peuvent prendre différentes configurations.

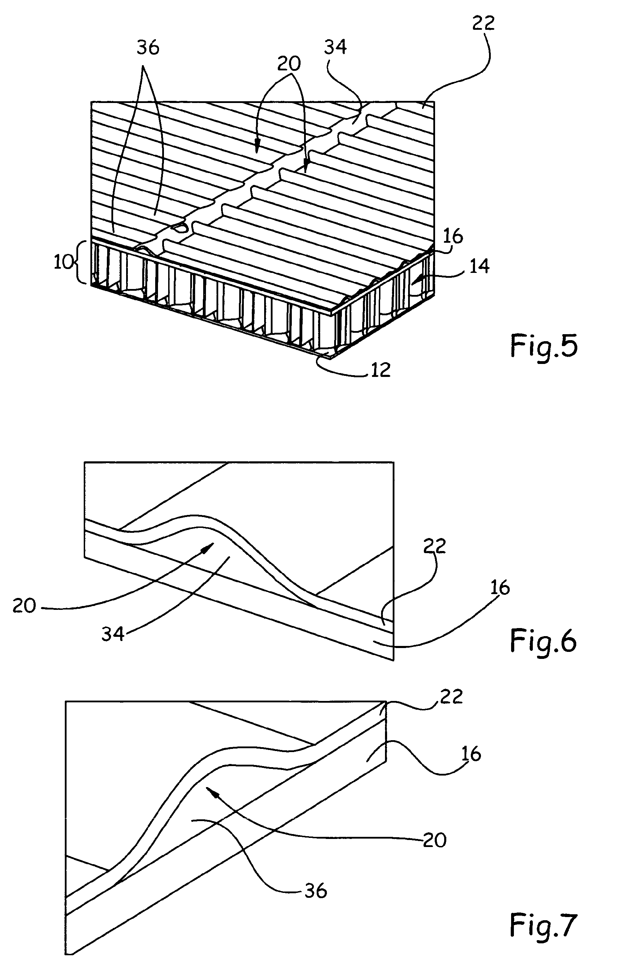

Le panneau pour le traitement acoustique comprend un système de drainage pour évacuer les fluides dudit panneau. A cet effet, le panneau pour le traitement acoustique comprend d'une part une pluralité d'orifices 18 ménagés dans la couche réflectrice 16, et d'autre part, au moins un conduit d'évacuation 20 (visible sur les figures 5 à 7), généralement un réseau de conduits d'évacuation 20, au niveau de la face libre de la couche réflectrice (opposée à celle contre laquelle est plaquée une structure alvéolaire).

Ainsi, les orifices 18 permettent de faire communiquer certaines zones de la structure alvéolaire 14 avec les conduits d'évacuation 20 afin d'évacuer les fluides présents à l'intérieur du panneau vers lesdits conduits 20.

Le panneau pour le traitement acoustique 10 peut être disposé au niveau de la surface d'un conduit d'une nacelle. Dans ce cas, la couche réflectrice 16 n'est pas plane mais courbe et les orifices 18 peuvent ne pas être alignés comme illustré sur la figure 1.

Selon un autre aspect, la couche réflectrice 16 n'est pas généralement régulière et peut comprendre des formes en creux au niveau des cellules appelées également « telegraphing ».

Le panneau acoustique comprend une plaque de drainage 22 avec des sillons 24, plaquée contre la face libre de la couche réflectrice 16 de manière à délimiter avec ladite couche réflectrice 16 le réseau de conduits d'évacuation 20.

Selon l'invention, le procédé de réalisation du panneau acoustique équipé d'un système de drainage consiste à mettre en forme si nécessaire le panneau selon sa géométrie finale (telle qu'elle sera lorsque le panneau sera installé dans la zone nécessitant un traitement acoustique).

Selon l'invention, la face libre de la couche réflectrice 16 est utilisée comme un mandrin.

En suivant, on appose sur au moins une partie de la face libre de la couche réflectrice 16 un film de démoulage 26 par exemple un film de polytétrafluoroéthylène. Ce film 26 doit être suffisamment souple pour éventuellement se déformer et être plaqué au maximum contre la face libre de la couche réflectrice 16 même si cette dernière n'a pas une surface régulière.

Ce film 26 recouvre la face libre de la couche réflectrice sur au moins la zone correspondant à la plaque 22.

Enfin, la nature et/ou le matériau du film 26 doit permettre de pouvoir séparer une pièce ultérieurement moulée sur le mandrin formé par le panneau 10.

Le film 26 n'est pas opaque mais relativement transparent pour que les orifices 18 soient toujours visibles.

En variante, on pourrait remplacer le film 26 par tout autre élément tel qu'un revêtement facilitant le démoulage et pouvant être retiré afin d'autoriser le collage de la plaque de drainage sur la face libre de la couche réflectrice.

En suivant, on applique sur le film de démoulage 26 au moins un noyau 28 dont la section correspond au conduit d'évacuation. De préférence, ce noyau 28 a une section avec une première face sensiblement plane 30 destinée à être rapportée sur la face libre de la couche réflectrice 16 et une seconde face arrondie 32 contre laquelle est susceptible d'être plaquée une face de la plaque de drainage 22.

Selon un mode de réalisation, le noyau 28 est en silicone repositionnable et ajustable.

Par ajustable, on entend que le noyau 28 peut se déformer de manière à recouvrir les orifices 18 même si ces derniers ne sont pas alignés.

Par repositionnable, on entend que la surface 30 du noyau peut être collée et décollée du film afin d'ajuster le positionnement du noyau par rapport aux orifices 18 et de pouvoir réutiliser le noyau pour la réalisation de plusieurs panneaux 10.

Avantageusement, le panneau comprend un réseau de conduits d'évacuation avec au moins un conduit principal 34 et des conduits secondaires 36 dont une première extrémité débouche dans un conduit principal 34 et dont l'autre extrémité est obstruée.

Dans ce cas, comme illustré sur la figure 2, le noyau 28 peut se présenter sous la forme d'un squelette avec un tronc 34' correspondant au conduit principal 34 et des branches 36' correspondant aux conduits secondaires 36. Pour fixer un ordre de grandeur, le tronc a une section de l'ordre de 30 mm² alors que les branches ont une section de l'ordre de 6 à 7 mm², soit un rapport section d'une branche/ section du tronc de l'ordre de 1/3.

En variante, le tronc et les branches peuvent avoir des sections variables sur leurs longueurs. Ainsi, les branches peuvent avoir une constriction entre deux zones au niveau de chacune desquelles débouche un orifice.

Le tronc et les branches du noyau 28 sont suffisamment souple de façon à pouvoir être déformés si nécessaire afin d'adapter la géométrie du noyau à celle des orifices 18 afin que ces derniers soient recouverts par le noyau 28.

Lorsque le noyau 28 est mis en place, on moule la plaque de drainage 22. Selon un mode de réalisation, la plaque de drainage 22 est obtenue à partir de plis de fibres noyés dans une matrice en résine.

Bien entendu, l'invention n'est pas limitée à ce type de fibres et de résine.

Selon un mode opératoire, on drappe sur le panneau 10 utilisé comme mandrin le film de démoulage 26 et au moins un noyau 28 des plis de fibres de carbone pré imprégnées.

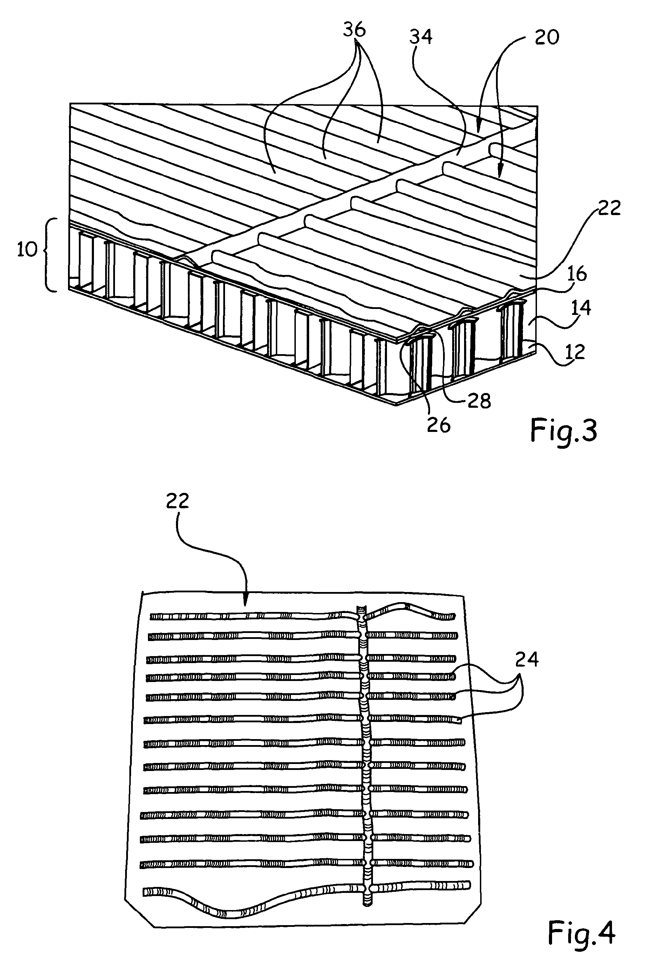

On obtient un panneau comme illustré sur la figure 3.

La plaque de drainage 22 est au moins partiellement polymérisée de façon à ce qu'elle soit suffisamment rigide pour pouvoir être manipulée.

De préférence, la plaque de drainage 22 est entièrement polymérisée.

En suivant, on retire la plaque de drainage 22, le noyau 28 et le film de démoulage 26.

Comme illustré sur la figure 4, on obtient une plaque de drainage comportant sur l'une de ses faces (celle devant être plaquée contre la face libre de la couche réflectrice) des sillons correspondant au réseau de conduits d'évacuation.

Le procédé selon l'invention permet d'obtenir une plaque de drainage avec un réseau de conduits adapté à l'implantation des orifices 18 de manière à ce que ces derniers débouchent bien à l'intérieur des conduits d'évacuation.

De la même manière, la plaque de drainage 22 possède au niveau de la face susceptible d'être en contact avec la couche réflectrice 16 un relief adapté à celui de ladite couche. Cette caractéristique permet de garantir que la plaque de drainage soit bien en contact avec la couche réflectrice entre les sillons même si la couche réflectrice comprend des irrégularités de surface appelées également « telegraphing ».

Après le retrait du noyau 28 et du film de démoulage 26, on solidarise la plaque de drainage 22 à la surface libre de la couche réflectrice 16 de manière à ce que les sillons forment des conduits d'évacuation 20.

Selon un mode opératoire, on enduit, avec tout produit assurant le collage, les zones entre les sillons de la face de la plaque de drainage 22 et on applique ladite plaque contre la couche réflectrice 16 du panneau. En variante, le collage peut être remplacé ou complété par d'autres moyens de fixation.

On obtient alors un panneau pour le traitement acoustique comme illustré sur la figure 5.

Selon l'exemple illustré, ce panneau comprend un conduit principal 34 dont la section est visible en détails sur la figure 6 et une pluralité de conduits secondaires 36 débouchant dans le conduit principal 34 dont une section est visible en détails sur la figure 7.

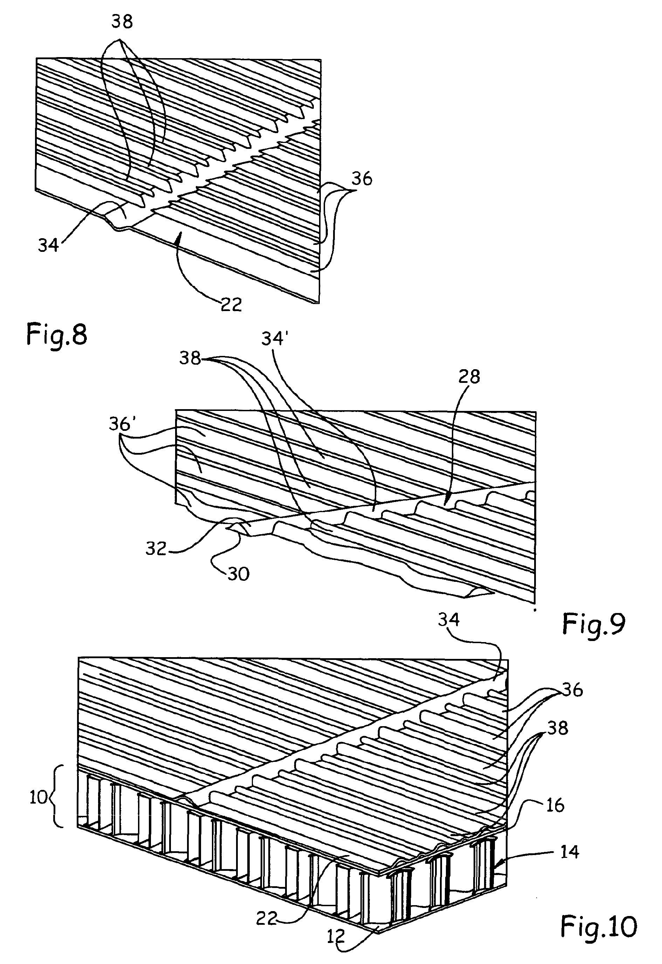

Selon une autre variante illustrée sur les figures 8 à 10, on peut prévoir au niveau de la plaque de drainage 22 des sillons pour la colle 38. Ces sillons de colle 38 sont agencés de façon à assurer une bonne étanchéité entre deux conduits d'évacuation 20 adjacents.

Selon l'exemple illustré sur la figure 8, les sillons de colle 38 sont prévus entre les conduits secondaires 36.

Avantageusement, les conduits de colle 38 débouchent dans le conduit principal 34. Cet agencement permet d'obtenir un noyau 28 d'un seul tenant comme illustré sur la figure 9 avec des branches pour la colle 38' prévues pour les sillons de colle reliées au tronc 34' prévu pour le conduit principal entre les branches 36' prévues pour les conduits secondaires.

Selon ce mode opératoire, comme précédemment, on met en forme le panneau pour le traitement acoustique si nécessaire, et sa couche réflectrice est utilisée comme mandrin.

Après mise en place du film de démoulage 26 et du noyau 28, on moule la plaque de drainage 22, par drappage de plis de fibres pré imprégnées et polymérisation par exemple.

En suivant, on démoule la plaque de drainage 22 et on retire le noyau 28 et le film de drainage 26.

Contrairement au mode opératoire précédent, on applique le produit destiné au collage de la plaque de drainage 22 uniquement au niveau des sillons de colle 38. Enfin, on applique la plaque de drainage 22 contre la face libre de la couche réflectrice 16. On obtient un panneau pour le traitement acoustique comme illustré sur la figure 10.

Ce mode opératoire permet de garantir une excellente étanchéité entre deux conduits d'évacuation 20 adjacents. De plus, cette solution permet d'éviter que le produit utilisé pour le collage ne migre vers les conduits secondaires et les obture.

## Revendications

1. Procédé de réalisation d'un panneau pour le traitement acoustique comportant une couche poreuse acoustiquement résistive (12), au moins une structure alvéolaire (14), une couche réflectrice (16) avec des orifices (18) et une plaque de drainage (22) comportant au moins un sillon permettant de délimiter au moins un conduit d'évacuation (20) lorsque ladite plaque de drainage (22) est plaquée contre la face libre de la couche réflectrice (16), **caractérisé en ce qu'**il consiste à :
- mettre en forme si nécessaire la couche réflectrice (16) selon sa géométrie finale,
- apposer sur au moins une partie de la face libre de la couche réflectrice (16) un film de démoulage (26),
- positionner sur le film de démoulage (26) au moins un noyau (28) dont la section est adaptée à celle du conduit d'évacuation (20) de manière à ce que ledit au moins un noyau (28) recouvre les orifices (18) de la couche réflectrice (16),
- mouler la plaque de drainage (22) sur ledit film de démoulage (26) et ledit au moins un noyau (28),
- démouler la plaque de drainage (22) et retirer ledit au moins un noyau (28) et ledit film de démoulage (26),
- solidariser la plaque de drainage (22) à la surface libre de la couche réflectrice (16).

2. Procédé de réalisation d'un panneau pour le traitement acoustique selon la revendication 1, **caractérisé en ce que** le noyau (28) est en un matériau lui permettant de se déformer de manière à ajuster sa géométrie à celle des orifices (18).

3. Procédé de réalisation d'un panneau pour le traitement acoustique selon la revendication 2, **caractérisé en ce que** le noyau (28) est en silicone.

4. Procédé de réalisation d'un panneau pour le traitement acoustique selon l'une quelconque des revendications 1 à 3, **caractérisé en ce que** le noyau (28) est repositionnable.

5. Procédé de réalisation d'un panneau pour le traitement acoustique selon l'une quelconque des revendications 1 à 4, ledit panneau comprenant au moins un conduit principal (34) et des conduits secondaires (36) dont une première extrémité débouche dans un conduit principal (34) et dont l'autre extrémité est obstruée, **caractérisé en ce que** le noyau (28) comprend un tronc (34') correspondant au conduit principal (34) et des branches (36') correspondant aux conduits secondaires (36) reliées audit tronc (34').

6. Procédé de réalisation d'un panneau pour le traitement acoustique selon l'une quelconque des revendications 1 à 5, **caractérisé en ce que** la plaque de drainage (22) est obtenue par drappage de plis de fibres noyées dans une matrice de résine et par polymérisation.

7. Procédé de réalisation d'un panneau pour le traitement acoustique selon l'une quelconque des revendications 1 à 6, **caractérisé en ce que** la plaque de drainage (22) est solidarisée à la couche réflectrice (16) par collage.

8. Procédé de réalisation d'un panneau pour le traitement acoustique selon la revendication 7, **caractérisé en ce qu'**il consiste à positionner au moins un noyau (28) de manière à créer des sillons pour la colle (38) au niveau de la plaque de drainage (22) et, après moulage et démoulage de ladite plaque de drainage (22), à disposer la colle dans lesdits sillons puis plaquer ladite plaque de drainage (22) contre la face libre de la couche réflectrice afin de les solidariser.

9. Procédé de réalisation d'un panneau pour le traitement acoustique selon la revendication 8, ledit panneau comprenant au moins un conduit principal (34) et des conduits secondaires (36) dont une première extrémité débouche dans un conduit principal (34) et dont l'autre extrémité est obstruée, **caractérisé en ce que** le noyau (28) comprend un tronc (34') correspondant au conduit principal (34), des branches (36') correspondant aux conduits secondaires (36) reliées audit tronc (34') et des branches pour la colle (38') prévues pour les sillons pour la colle reliées au tronc (34') entre les branches (36') prévues pour les conduits secondaires.

## Claims

1. Process for the production of a panel for acoustic treatment that comprises an acoustically resistive porous layer (12), at least one alveolar structure (14), a reflective layer (16) with openings (18), and a drainage plate (22) that comprises at least one furrow that makes it possible to delimit at least one evacuation pipe (20) when said drainage plate (22) is flattened against the free surface of the reflective layer (16), **characterized in that** it consists in:
- Shaping, if necessary, the reflective layer (16) according to its final geometry,
- Affixing a demolding film (26) on at least one portion of the free surface of the reflective layer (16),
- Positioning on the demolding film (26) at least one core (28) whose cross-section is adapted to that of the evacuation pipe (20) in such a way that said at least one core (28) covers the openings (18) of the reflective layer (16),
- Molding the drainage plate (22) on said demolding film (26) and said at least one core (28),
- Demolding the drainage plate (22) and removing said at least one core (28) and said demolding film (26),
- Making the drainage plate (22) integral with the free surface of the reflective layer (16).

2. Process for the production of a panel for acoustic treatment according to Claim 1, wherein the core (28) is made of a material that makes it possible to deform in such a way as to adjust its geometry to that of the openings (18).

3. Process for the production of a panel for acoustic treatment according to Claim 2, wherein the core (28) is made of silicone.

4. Process for the production of a panel for acoustic treatment according to any of Claims 1 to 3, wherein the core (28) can be repositioned,

5. Process for the production of a panel for acoustic treatment according to any of Claims 1 to 4, whereby said panel comprises at least one primary pipe (34) and secondary pipes (36), of which a first end empties into a primary pipe (34) and of which the other end is obstructed, wherein the core (28) comprises a trunk (34') that corresponds to the primary pipe (34) and branches (36') that correspond to the secondary pipes (36) that are connected to said trunk (34').

6. Process for the production of a panel for acoustic treatment according to any of Claims 1 to 5, wherein the drainage plate (22) is obtained by draping folds of fibers immersed in a resin matrix and by polymerization.

7. Process for the production of a panel for acoustic treatment according to any of Claims 1 to 6, wherein the drainage plate (22) is made integral with the reflective layer (16) by bonding.

8. Process for the production of a panel for acoustic treatment according to Claim 7, wherein it consists in positioning at least one core (28) in such a way as to create furrows for the adhesive (38) at the drainage plate (22), and, after molding and demolding said drainage plate (22), in arranging the adhesive in said furrows and then flattening said drainage plate (22) against the free surface of the reflective layer so as to make them integral.

9. Process for the production of a panel for acoustic treatment according to Claim 8, whereby said panel comprises at least one primary pipe (34) and secondary pipes (36) of which a first end empties into a primary pipe (34) and of which the other end is obstructed, wherein the core (28) comprises a trunk (34') that corresponds to the primary pipe (34), branches (36') that correspond to the secondary pipes (36) connected to said trunk (34'), and branches for the adhesive (38') provided for the furrows for the adhesive connected to the trunk (34') between the branches (36') provided for the secondary pipes.

## Patentansprüche

1. Verfahren zur Herstellung einer Platte für die Schallbehandlung mit einer porösen schalldämpfenden, Schicht (12), wenigstens einer Kammerstruktur (14), einer reflektierenden Schicht (16) mit Öffnungen (18) und einer Abflussplatte (22), die wenigstens eine Vertiefung aufweist, die es gestattet, wenigstens eine Abflussleitung (20) zu begrenzen, wenn die Abflussplatte (22) auf die freie Seite der reflektierenden Schicht (16) aufgebracht wird, **gekennzeichnet durch**:
- falls notwendig, Formen der reflektierenden Schicht (16) gemäß seiner endgültigen Geometrie,
- Aufbringen eines Ablösefilms (26) auf wenigstens einen Teil der freien Seite der reflektierenden Schicht (16),
- Aufsetzen von wenigstens einem Kern (28) auf dem Ablösefilm (26), dessen Querschnitt an den Querschnitt der Abflussleitung (20) derart angepasst ist, dass der wenigstens eine Kern (28) die öffnungen (18) der reflektierenden Schicht (16) abdeckt,
- Abformen der Abflussplatte (22) auf dem Ablösefilm (26) und dem wenigstens einen Kern (28),
- Ablösen der Abflussplatte (22) und Abziehen des wenigstens einen Kerns (28) und des Ablösefilms (26),
- Anbringen der Abflussplatte (22) an der freien Oberfläche der reflektierenden Schicht (16).

2. Verfahren zur Herstellung einer Platte für die Schallbehandlung nach Anspruch 1, **dadurch gekennzeichnet, dass** der Kern (28) aus einem Material ist, das ihm gestattet sich zur Anpassung an die Geometrie der Öffnungen (18) zu verformen.

3. Verfahren zur Herstellung einer Platte für die Schallbehandlung nach Anspruch 2, **dadurch gekennzeichnet, dass** der Kern (28) aus Silikon ist.

4. Verfahren zur Herstellung einer Platte für die Schallbehandlung nach einem der Ansprüche 1 bis 3, **dadurch gekennzeichnet, dass** der Kern (28) repositionierbar ist.

5. Verfahren zur Herstellung einer Platte für die Schallbehandlung nach einem der Ansprüche 1 bis 4, bei dem die Platte wenigstens eine Hauptleitung (34) und Nebenleitungen (36) aufweist, deren erstes Ende in die Hauptleitung (34) mündet und deren anderes Ende geschlossen ist, **dadurch gekennzeichnet, dass** der Kern (28), einen Stamm (34') aufweist, der der Hauptleitung (34) entspricht, und Zweige (36'), die den Nebenleitungen (36) entsprechen und mit dem Stamm (34') verbunden sind.

6. Verfahren zur Herstellung einer Platte für die Schallbehandlung nach einem der Ansprüche 1 bis 5, **dadurch gekennzeichnet, dass** die Abflussplatte (22) durch Alblage von mit einer Harzmatrix getränkten Faserlagen und durch Polymerisation erhalten wird.

7. Verfahren zur Herstellung einer Platte für die Schallbehandlung nach einem der Ansprüche 1 bis 6, **dadurch gekennzeichnet, dass** die Abflussplatte (22) auf der reflektierenden Schicht (16) durch Kleben angebracht wird.

8. Verfahren zur Herstellung einer Platte für die Schallbehandlung nach Anspruch 7, **dadurch gekennzeichnet, dass** es darauf beruht, wenigstens einen Kern (28) auf eine Art und Weise zu positionieren, um Vertiefungen für Klebstoff (38) im Bereich der Abflussplatte (22) zu schaffen, und um nach dem Formen und dem Ablösen der Abflussplatte (22) den Klebstoff in die Vertiefungen einzubringen und dann die Abflussplatte (22) an der freien Seite der reflektierenden Schicht anzubringen, um diese zu verbinden.

9. Verfahren zur Herstellung einer Platte für die Schallbehandlung nach Anspruch 8, wobei die Platte wenigstens eine Hauptleitung (34) und Nebenleitungen (36) umfasst, deren erstes Ende in die Hauptleitung (34) mündet und deren anderes Ende geschlossen ist, **dadurch gekennzeichnet, dass** der Kern (28) einen Stamm (34') aufweist, der der Hauptleitung (34) entspricht, Zweige (36'), die den mit dem Stamm (34') verbundenen Nebenleitungen (36) entsprechen, und Zweige für den Klebstoff (38'), die für die Vertiefungen für den Klebstoff vorgesehen sind und die zwischen den für die Nebenleitungen vorgesehenen Zweigen (36') mit dem Stamm (34') verbunden sind.
